# EUROPEAN PATENT APPLICATION

(11) **EP 0 668 510 A1**
(43) Date of publication of application: **23.08.1995**
(21) Application number: 95300848.9
(22) Date of filing: 10.02.1995
(51) Int. Cl.: G01R 29/26

(54) **An apparatus for providing a display**

(30) Priority: 22.02.1994 GB 9403323
(71) Applicant: MARCONI INSTRUMENTS LIMITED, St. Albans Hertfordshire, AL4 0JN (GB)
(72) Inventor: Flitton, Gregory Thomas, Letchworth, Herts SG6 2UA (GB)
(74) Representative: McGowan, Nigel George

(57) **Abstract**

An apparatus for providing a display indicative of the quality of operation of a digital radio frequency transmitter and/or receiver comprising: means for repositioning a plurality of the points in a plot of amplitude against phase of a signal of the transmitter or receiver, the repositioning made being that which would reposition each point of the plurality to the same position in the plot if the transmitter and/or receiver were operating perfectly; and means for displaying the repositioned points, and thereby the spread thereof about said same position due to imperfect operation of the transmitter and/or receiver, to provide said indication of the quality of operation of the transmitter and/or receiver.

## Description

This invention relates to an apparatus for providing a display.

More particularly, the invention relates to an apparatus for providing a display indicative of the quality of operation of a digital radio frequency transmitter and/or receiver.

There is known an apparatus for providing a display indicative of the quality of modulation by a digital radio frequency transmitter employing a modulation scheme which adjusts the amplitude and phase of a carrier to encode the information to be transmitted. Typical such modulation schemes are bi-phase shift keying (BPSK), quadrature phase shift keying (QPSK) and sixteen state quadrature amplitude modulation (16 QAM). The display provided by the apparatus comprises a representation in polar co-ordinates of the amplitude and phase of the carrier signal at discrete, so called symbol clock times. The amplitude is considered to be represented by a vector drawn from the origin to the point plotted in the polar plot, the phase by the angle subtended between this vector and the horizontal positive axis when moving in the clockwise sense from the vector.

As is well known, a plurality of predetermined positions in the polar plot are used to determine the digital symbols transmitted. If, at a symbol clock time, the carrier amplitude and phase do not quite have values equal to those of the predetermined position intended at that time, then a vector error is said to be present, which may be represented by a vector drawn from the predetermined position to the actual amplitude/phase position in the polar plot. With the transmission of digital symbols, a group of plotted phase/amplitude points builds up in the region of each predetermined position. Each such group is termed a constellation, and the spread of plotted points comprising each constellation provides an indication of the quality of modulation by the transmitter.

Particularly in the case where a more complex modulation scheme is being used, an undesirably large number of constellations need be studied in assessing the quality of modulation. Further, in order to display all the constellations, the scale of the display must be undesirably small.

It is an object of the present invention to provide an apparatus for providing a display indicative of the quality of operation of a digital radio frequency transmitter and/or receiver wherein the above problems are alleviated.

According to the present invention there is provided an apparatus for providing a display indicative of the quality of operation of a digital radio frequency transmitter and/or receiver comprising: means for repositioning a plurality of the points in a plot of amplitude against phase of a signal of the transmitter or receiver, the repositioning made being that which would reposition each point of the plurality to the same position in the plot if the transmitter and/or receiver were operating perfectly; and means for displaying the repositioned points, and thereby the spread thereof about said same position due to imperfect operation of the transmitter and/or receiver, to provide said indication of the quality of operation of the transmitter and/or receiver.

Two apparatus in accordance with the present invention will now be described, by way of example, with reference to the accompanying drawings, in which:
Figure 1 is a block schematic diagram of the first apparatus together with a digital radio frequency transmitter under test by the apparatus;
Figure 2 is a representation in polar co-ordinations of the variation of the amplitude and phase with time of a signal generated by the transmitter of Figure 1 when using the modulation scheme π/4 differential quaternary phase shift keying (DQPSK);
Figure 3 is a representation in polar co-ordinates of constellations of the representation of Figure 2;
Figure 4 is a representation in polar co-ordinates of the constellations of Figure 3 repositioned;
Figure 5 is a representation in polar co-ordinates of constellations of a signal generated by the transmitter of Figure 1 when using the modulation scheme 16 QAM;
Figure 6 is a representation in polar co-ordinates of the amplitude and phase at discrete times of an unmodulated carrier signal generated by the transmitter of Figure 1 and received by the apparatus of Figure 1 with a frequency offset;
Figure 7 is the same representation as that of Figure 6 but with the effect of the frequency offset removed; and
Figure 8 is a block schematic diagram of the second apparatus together with a digital radio frequency receiver under test by the apparatus.

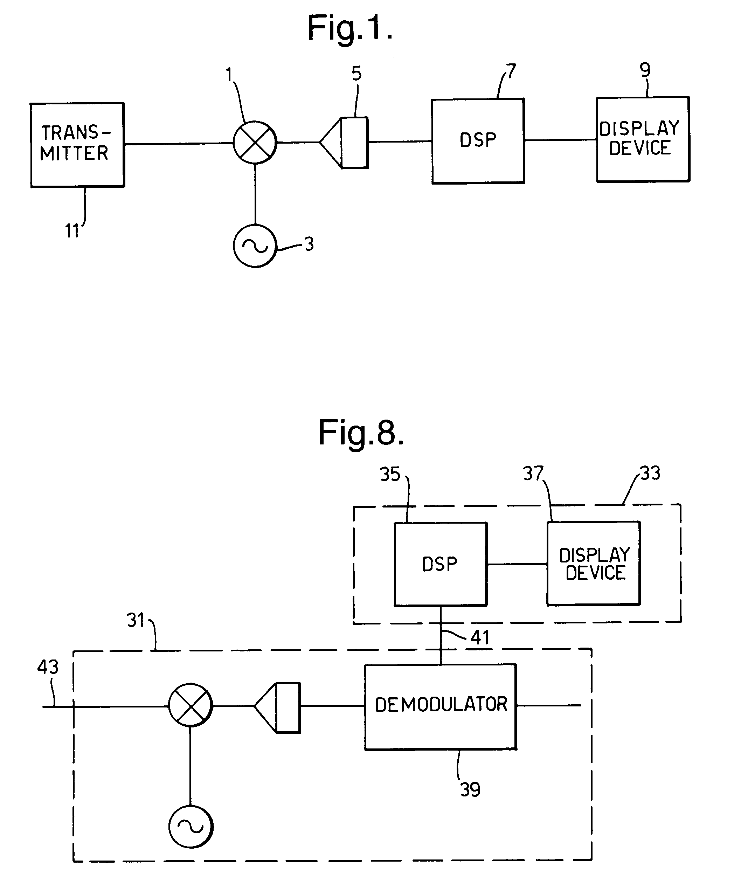

Referring to Figure 1, the first apparatus comprises a mixer 1, local oscillator 3, analogue-to-digital (A/D) converter 5, digital signal processor (DSP) 7, and display device 9. The modulation scheme employed by the transmitter 11 under test is π/4 DQPSK.

Mixer 1 mixes a modulated signal received from transmitter 11 with a signal generated by local oscillator 3 to down-convert the frequency of the signal received to an intermediate frequency manageable by A/D converter 5. The intermediate frequency signal is digitised by A/D converter 5 and passed to DSP 7.

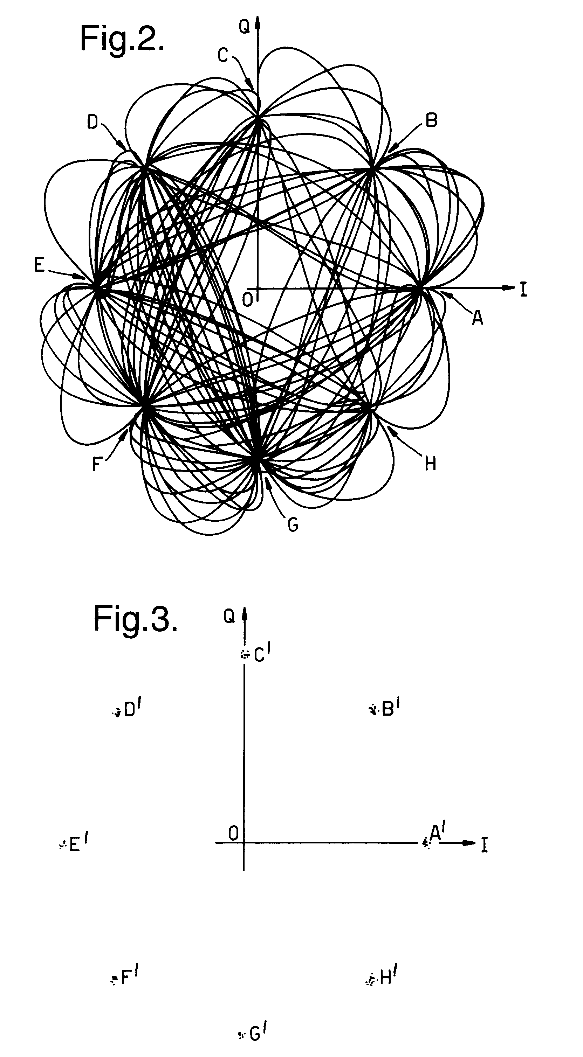

Referring also to Figure 2, by the known technique of quadrature mixing followed by suitable low pass filtering, DSP 7 determines the variation with time of the in phase (I) and quadrature (Q) components of the digital signal received from A/D converter 5. In other words, DSP 7 determines the variation with time of the amplitude and phase of the signal generated by transmitter 11. In Figure 2, the amplitude at any instant in time is considered to be represented by a vector drawn from the origin to the point plotted at that instant, the phase by the angle subtended between this vector and the positive I axis when moving in the clockwise sense from the vector. Since the modulation scheme employed by transmitter 11 is π/4 DQPSK, eight predetermined positions or so called phase decision points A-H, used to determine the digital symbols transmitted, can be seen in Figure 2.

Referring also to Figure 3, DSP 7 determines the amplitude and phase values at the symbol clock times. These values are represented by the points plotted in Figure 3. If transmitter 11 were operating perfectly, all that would be seen in Figure 3 would be eight plotted points, each point representing the same amplitude and the points being positioned at integer multiples of π/4 radians. However, due to imperfect operation, at a symbol clock time, the amplitude and phase may not quite have values equal to those of the predetermined position intended at that time. This results in the build up of a group of points in the region of each of the predetermined positions. Thus, eight groups A' - H' are formed. Each group A' - H' is termed a constellation, and the spread of the points comprising each constellation A' - H' provides an indication of the quality of modulation by transmitter 11.

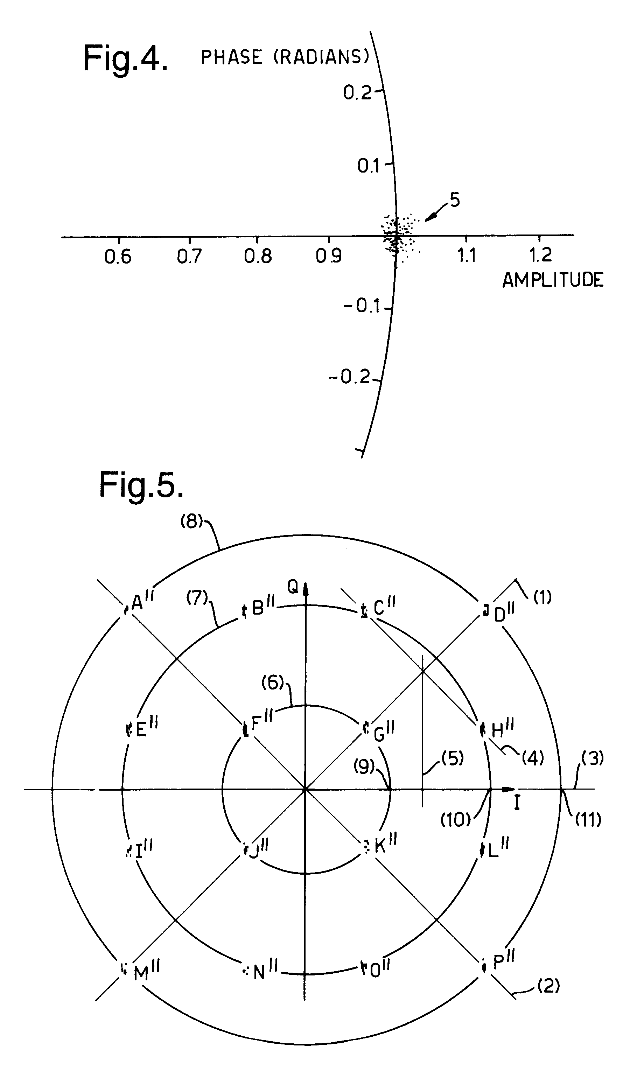

Referring also to Figure 4, whilst preserving the amplitude of each point of each of the seven constellations B' - H', DSP 7 rotates each point thereof about the origin by the number of integer multiples of π/4 radians necessary to relocate each constellation B' - H' to the position of constellation A', i.e. each point of constellation B' is rotated clockwise by π/4 radians, each point of constellation C' clockwise by π/2 radians, each point of constellation D' clockwise by 3π/4 radians, etc. In other words, the repositioning is that which would reposition each plotted point to one and the same position if transmitter 11 were operating perfectly, this same position being that of the predetermined position having a phase angle of zero radians. Thus, a 'super' constellation S is formed.

Constellation S contains all the information relevant to indicating the quality of modulation by transmitter 11 that constellations A' - H' contain, i.e. deviations from the amplitude and phase values of the predetermined positions are present in constellation S. Thus, only one constellation S, rather than eight A' - H', need be studied in assessing the quality of modulation by transmitter 11. In this connection, it is easier to keep an eye on what happens to the spread of the points comprising one constellation as attempts are made to improve the modulation by transmitter 11, than to keep an eye on what happens to the spreads of eight constellations. With the one constellation, the nett result of the attempt to improve is dearly seen, whereas with the eight constellations the nett result is not as immediately apparent. Further, the one constellation may be displayed on a much larger scale than the eight.

Display device 9 displays the single constellation S together with the amplitude and phase axes of Figure 4.

Referring also to Figure 5, the modulation scheme employed by the transmitter under test need not be π/4 DQPSK. For example, in the case where the modulation scheme 16QAM is used, the 16 constellations A'' - P'' produced may be repositioned to form a single constellation by: a reflection about the line (1) to bring constellations A'', B'', C'', E'', F'' and I'' to the positions of constellations P'', L'', H'', O'', K'' and N'' respectively; a reflection about the line (2) to bring the constellations at J'', M'', N'' and O'' to G'', D'', H'' and L'' respectively; a reflection about the line (3) to bring the constellations at K'', L'' and P'' to G'', H'' and D'' respectively; a reflection about the line (4) to bring the constellation at D'' to G''; and a reflection about the line (5) to bring the constellation at H'' to G''. These reflections produce a single constellation at G''.

It is to be appreciated that although in the above cases of π/4 DQPSK and 16 QAM modulation, the constellations present are repositioned to form one single constellation, merely repositioning to reduce the total number of constellations present can provide the beneficial effects mentioned above, i.e. not so many constellations to study in assessing the quality of modulation, and enabling the provision of a larger scale display. For example, in the case of 16 QAM modulation, rotations around the circles (6), (7) and (8) of Figure 5 to bring each constellation lying on each circle to the positive I axis will result in the formation of three constellations positioned at (9), (10) and (11) on the positive I axis. Studying these three constellations in assessing the quality of modulation is much easier than studying all 16, and the three may be displayed on a larger scale.

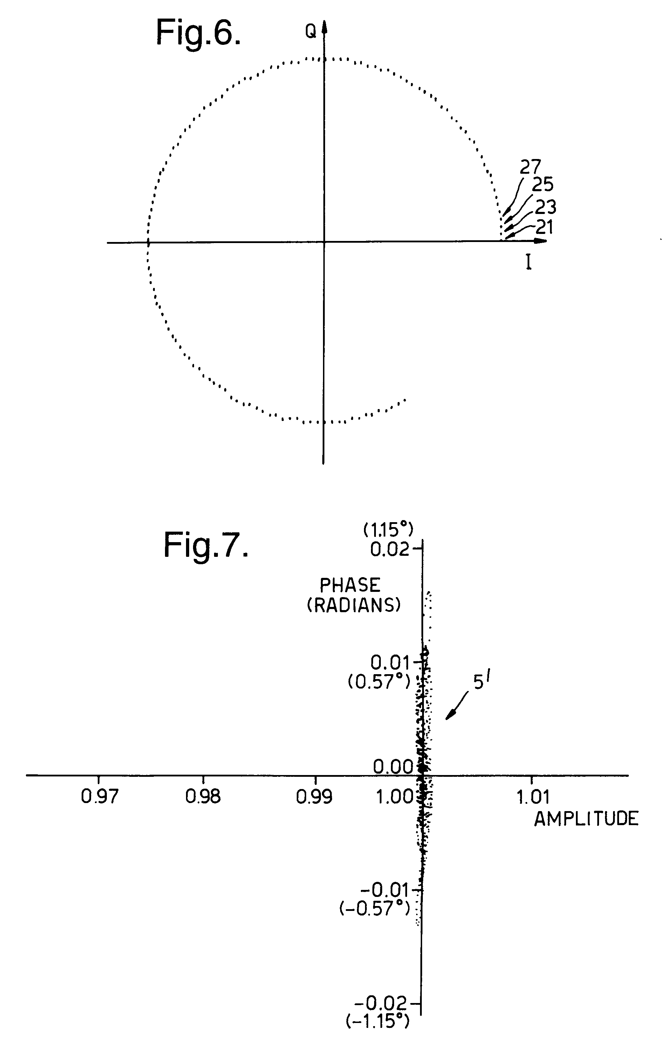

Referring also to Figure 6, the accuracy of generation by transmitter 11 of the carrier signal could be tested. The first apparatus and transmitter 11 are set so that the unmodulated carrier signal generated by the transmitter is received by the apparatus with a small frequency offset. As before, down-conversion followed by digitisation occurs. DSP 7 determines the amplitude and phase at time intervals of the period of the carrier signal. Each point 21, 23, 25, 27, etc. plotted in Figure 6 represents an amplitude and phase determined.

Referring also to Figure 7, DSP 7 estimates the frequency offset and, whilst preserving the amplitude of each plotted point, rotates each point about the origin by the number of integer multiples of the phase angle corresponding to the frequency offset necessary to relocate each point to the positive I axis, i.e. plotted point 23 is rotated clockwise by one times the phase angle, point 25 clockwise by two times the phase angle, point 27 clockwise by three times the phase angle, etc. In other words, the repositioning is that which would reposition each plotted point to one and the same position (on the positive I axis) if transmitter 11 were generating the carrier signal with 100% accuracy. This, a constellation S' is formed which dearly shows phase and amplitude error present in the carrier signal, phase error being represented by deviation from 0.00 on the phase axis of Figure 7, amplitude error being represented by deviation from 1.00 on the amplitude axis of Figure 7. As before, display device 9 displays constellation S' together with the amplitude and phase axes.

Referring also to Figure 8, the quality of operation of a digital radio frequency receiver 31 could be tested. The second apparatus 33 comprises a DSP 35 followed by a display device 37. A perfect modulated signal is supplied to receiver 31 at 43. The demodulator 39 of receiver 31 determines the amplitude and phase values at the symbol clock times. DSP 35 of apparatus 33 receives these values via connection 41. As DSP 7 of the first apparatus of Figure 1, DSP 35 carries out the necessary repositioning of the modulation constellations to form one super constellation. Display device 37 displays the super constellation. As a perfect modulated signal was supplied to receiver 31, any amplitude and phase errors present in the super constellation will be due to imperfect operation of the receiver.

Colour may be used in the displays provided by display devices 9, 37 to enhance the interpretation thereof. For example, in the display of a super constellation created by the repositioning of modulation constellations, the points comprising the super constellation may be displayed with different colours to indicate which point came from which modulation constellation. In the display of a super constellation created in testing the accuracy of generation of a carrier signal, the colour of the plotted points could progressively be changed with time. This would provide an indication of when during the generation of the carrier signal there was a deterioration in the accuracy of generation.

## Claims

1. An apparatus for providing a display indicative of the quality of operation of a digital radio frequency transmitter and/or receiver comprising: means for repositioning a plurality of the points in a plot of amplitude against phase of a signal of the transmitter or receiver, the repositioning made being that which would reposition each point of the plurality to the same position in the plot if the transmitter and/or receiver were operating perfectly; and means for displaying the repositioned points, and thereby the spread thereof about said same position due to imperfect operation of the transmitter and/or receiver, to provide said indication of the quality of operation of the transmitter and/or receiver.

2. An apparatus according to claim 1 wherein said plurality of points is all the points plotted.

3. An apparatus according to claim 1 or claim 2 further comprising means for determining the positions of the points in said plot prior to the repositioning of a plurality thereof.

4. An apparatus according to claim 3 wherein said signal is the modulated output of a digital radio frequency transmitter, said display indicating the quality of modulation by said transmitter, the positions of the points as determined by said means for determining being used to determine the digital symbols transmitted.

5. An apparatus according to claim 1 or claim 2 wherein: said signal is the modulated output of a digital radio frequency transmitter and is considered perfect; said means for repositioning receives a further signal from a demodulator of a digital radio frequency receiver, said further signal representing the positions of the points in said plot prior to the repositioning of a plurality thereof, the demodulator producing said further signal in response to the receipt by said receiver of the output of the transmitter, the positions of the points as represented by said further signal being used to determine the digital symbols transmitted; and said display indicates the quality of operation of said receiver.

6. An apparatus according to claim 4 or claim 5 wherein the modulation scheme employed by the transmitter is π/4 differential quaternary phase shift keying and said repositioning is effected by rotating said points about the origin of the plot by integer multiples of π/4 radians.

7. An apparatus according to claim 4 or claim 5 wherein the modulation scheme employed by the transmitter is sixteen state quadrature amplitude modulation and said repositioning is effected by a series of reflections of said points.

8. An apparatus according to claim 3 wherein: said signal is the unmodulated carrier signal of a digital radio frequency transmitter, said signal being received by said apparatus with a frequency offset; said repositioning is effected by rotating said points about the origin of the plot by integer multiples of the phase angle corresponding to said frequency offset; and said display indicates the quality of generation by the transmitter of the carrier signal.

9. An apparatus according to any one of the preceding claims wherein colour is used in the display provided by said means for displaying to enhance the interpretation thereof.
